# EUROPÄISCHE PATENTANMELDUNG

(11) **EP 0 937 574 A2**
(43) Veröffentlichungstag der Anmeldung: **25.08.1999**
(21) Anmeldenummer: 99102287.2
(22) Anmeldetag: 05.02.1999
(51) Int. Cl.: B31B 23/60

(54) **Verfahren und Vorrichtung zur kontinuerlichen Herstellung von Kunststoffhüllen**

(30) Priorität: 18.02.1998 DE 19806669
(71) Anmelder: HETZEL GmbH & Co. KG, 73635 Rudersberg-Steinenberg (DE)
(72) Erfinder: Senges, Harald, 73635 Obersteinenberg (DE)
(74) Vertreter: Patentanwälte Ruff, Beier, Schöndorf und Mütschele

(57) **Zusammenfassung**

Die Erfindung schlägt ein Verfahren und eine Vorrichtung zur kontinuierlichen Herstellung von Kunststoffhüllen vor, bei denen die Schweißungen, Lochungen und Trennvorhänge während der Bewegung der Folienbahn erfolgt. Dadurch wird eine größere Leistung bei einfacherem Aufbau der Vorrichtung möglich. Die quer zur Folienbahn verlaufenden Schweißungen werden mit Hilfe von Schweißbacken durchgeführt, die auf einem geschlossenen Weg mit einer Umfangsgeschwindigkeit bewegt werden, die der Lineargeschwindigkeit der Kunststoffbahn gleich ist. Die Bahn der Kunststoffolie verläuft tangential zu der Bewegungsbahn des Schweißbackens.

## Beschreibung

Die Erfindung geht aus von den bekannten Kunststoffhüllen. Diese werden in der Weise hergestellt, daß zwei Bahnen einer langen Kunststoffolie aufeinander gelegt werden, wobei die beiden Bahnen beispielsweise durch Umfalten einer einzigen Folie verwirklicht sein können. Diese Bahnen werden dann mit Hilfe von angetriebenen Walzen beispielsweise horizontal transportiert und in einem der Länge einer fertigen Kunststoffhülle entsprechenden Takt angehalten. Während des Stillstands wird dann eine Längsschweißung, eine Querschweißung, ggf. eine Lochung und eine Trennung durchgeführt. Dies geschieht mit Hilfe von auf die Ebene der Bahnen zu bewegbaren Schweißbacken, Lochstempeln oder Trennmessern. Nach Durchführung dieser Vorgänge muß die Folienbahn wieder beschleunigt werden. Diese Art der Herstellung führt dazu, daß die Leistung solcher Anlagen begrenzt ist.

Der Erfindung liegt die Aufgabe zugrunde, ein Verfahren und eine Vorrichtung zur Herstellung von Kunststoffhüllen zu schaffen, bei denen sich die Leistung vergrößern und/oder der Aufwand der Herstellungsanlage verringern läßt.

Zur Lösung dieser Aufgabe schlägt die Erfindung ein Verfahren mit den Merkmalen des Anspruchs 1 sowie eine Vorrichtung mit den im Anspruch 17 genannten Merkmalen vor. Weiterbildungen der Erfindung sind Gegenstand der abhängigen Ansprüche, deren Wortlaut ebenso wie der Wortlaut der Zuammenfassung durch Bezugnahme zum Inhalt der Beschreibung gemacht wird.

Durch die Herstellung der Querschweißung während der Bewegung braucht die Anlage zum Transport der Kunststoffbahnen nicht mehr angehalten und anschließend wieder beschleunigt zu werden. Selbst dann, wenn die Transportgeschwindigkeit der Bahnen sich nicht gegenüber den bekannten Anlagen vergrößert, vergrößert sich die Leistung einer Anlage zur Herstellung von Kunststoffbahnen. Die Verschweißung der beiden Folien in Querrichtung, bei der es sich auch um eine doppelte Verschweißung handeln kann, kann auf verschiedene Arten hergestellt werden. Während im Stand der Technik die Kunststoffhüllen in ihrer eigenen Längsrichtung hergestellt werden, ist es jetzt auch möglich, Kunststoffhüllen quer zur Längsrichtung der Folienbahn anzuordnen, so daß die Anlage insgesamt kürzer gebaut werden kann.

In Weiterbildung der Erfindung kann vorgesehen sein, daß die Bahnen während der Bewegung auch längs mindestens einer Längskante miteinander verschweißt werden. Dies macht es möglich, die Kunststoffhüllen so zu orientierten, daß ihre eigene Längsrichtung mit der Längsrichtung der Bahnen übereinstimmt, so daß die Vorrichtungsteile, die das Zuführen der Kunststoffolie und den Abtransport der fertiggestellten Kunststoffhüllen übernehmen, gegenüber den bekannten Anlagen nicht geändert zu werden brauchen. Außerdem ist es möglich, von zwei getrennten Kunststoffbahnen auszugehen, die dann längs beider Längskanten miteinander verschweißt werden.

Die Längsschweißung kann beispielsweise, wie dies die Erfindung in Weiterbildung vorschlägt, durch ein Schweißrad hergestellt werden, das um eine parallel zu der Fläche der Bahn und senkrecht zu der Transporteinrichtung der Bahnen verlaufende Achse mit einer der Lineargeschwindigkeit der Bahnen entsprechenden Umfangsgeschwindigkeit gedreht wird. Das Schweißrad läuft also auf den kontinuierlich weiterbewegten Kunststoffolien ab und führt dabei eine Erwärmung und damit Verschweißung durch.

Insbesondere kann vorgesehen sein, daß auf der gegenüberliegenden Seite der Bahn ein ähnliches Rad angeordnet wird, das in entgegengesetzter Drehrichtung um eine parallele Drehachse rotiert, und mit dem das Schweißrad zusammenwirkt. Die beiden Räder schließen die Folie zwischen sich ein und das zweite Rad kann entweder als Gegenelement oder auch als Schweißrad ausgebildet sein. Je nach Art der Erwärmung braucht auch keine Berührung zwischen dem Schweißrad, der Folie und dem Gegenelement vorhanden zu sein. Das Gegenelement kann bei Berührung mit der Folie und dem Schweißrad von dem Schweißrad selbst angetrieben und mitgeführt werden. Es kann eine von der Größe des Schweißrads unterschiedliche Größe aufweisen.

In Weiterbildung der Erfindung kann vorgesehen sein, daß die Querschweißung von einem Schweißbacken durchgeführt wird, der an der Schweißstelle mit den Kunststoffbahnen mitbewegt wird. Auch der Schweißbacken kann beispielsweise durch eine Erwärmung die Verschweißung durchführen. Auch hier kann vorgesehen sein, daß der Schweißbacken mit einem auf der gegenüberliegenden Seite der Bahnen angeordneten mit diesen an der Schweißstelle mitbewegten Gegenbacken zusammenwirkt. Auch dieser gegenüberliegende Backen kann ein selbständiger Schweißbacken oder ein Gegenelement sein, gegen das der obere Schweißbacken die Kunststoffolie andrückt.

Die Bewegung des Schweißbackens und/oder des Gegenbackens kann beispielsweise längs eines geschlossenem Bewegungsweges erfolgen, wobei diese Bewegung beispielsweise mit Hilfe von Ketten oder Zahnriemen durchgeführt werden kann.

Es kann erfindungsgemäß vorgesehen sein, daß der zur Herstellung der Querschweißung verwendete Schweißbacken gleichzeitig auch eine Trennschweißung durchführt, so daß die querverlaufenden Trennung zur Vereinzelung der einzelnen Kunststoffhüllen von dem Schweißbacken mit durchgeführt wird.

Es kann erfindungsgemäß aber auch vorgesehen sein, daß die Bahnen mit einem quer zur Transportrichtung verlaufenden Messer getrennt werden, das an der Trennstelle ebenfalls mit den Bahnen mitbewegt wird und ggf. mit einem auf der gegenüberliegenden Seite der Bahnen angeordneten Gegenelement zusammenwirkt.

Insbesondere kann erfindungsgemäß in Weiterbildung vorgesehen sein, daß das Messer und/oder das Gegenelement gegenläufig längs einer Kreisbahn bewegt werden. Diese Kreisbahn nähert sich der Folienbahn an, bis an der Berührungsstelle die eigentliche Trennung erfolgt.

Falls die Kunststoffhüllen längs ihres einen Randes eine Lochung aufweisen sollen, mit der sie in Ordnern abgeheftet werden können, kann erfindungsgemäß vorgesehen sein, daß die Bahnen während ihres Transports auch mit einer Lochung versehen werden.

Die Lochung kann insbesondere mit einem mit den Bahnen mitbewegten Lochstempel durchgeführt werden, der mit einem auf der gegenüberliegenden Seite der Bahnen mit diesem mithewegten Matrizenelement zusammenwirkt.

Wenn die Lochungen längs der Längskante der Bahnen angebracht sein sollen, kann erfindungsgemäß vorgesehen sein, daß die Lochstempel auf dem Umfang eines mitlaufenden Lochungsrades angeordnet sind.

Auch hier kann der Lochstempel und/oder das Matrizenelement gegenläufig längs einer geschlossenen Bahn bewegt werden, insbesondere längs einer Kreisbahn.

Die von der Erfindung vorgeschlagene Vorrichtung mit den Merkmalen des Anspruchs 17 ist in der Lage, pro Zeiteinheit eine größere Zahl von Kunststoffhüllen zu fertigen als dies im Stand der Technik möglich ist. Die Anlage kann außerdem einfach aufgebaut sein, da die durch die Abbremsung der Transporteinrichtung und die Wiederbeschleunigung auftretenden großen Kräfte vermieden werden.

Die Einrichtung zur Längsverschweißung kann ein Schweißrad aufweisen, das mit einer der Lineargeschwindigkeit der Bahnen entsprechenden Umfangsgeschwindigkeit drehangetrieben wird und mit einem in umgekehrter Drehrichtung rotierenden auf der gegenüberliegenden Seite der Folienbahn angeordneten Gegenrad zusammenwirkt.

Die Einrichtung zum Querschweißen kann erfindungsgemäß einen quer angeordneten Schweißbacken aufweisen, der längs eines geschlossenen Weges parallel zu sich selbst mit einer der Lineargeschwindigkeit der Bahnen entsprechenden Umfangsgeschwindigkeit bewegt wird und mit einem auf der gegenüberliegenden Seite der Folienbahn angeordneten gegenläufig bewegbaren Gegenelement zusammenwirkt.

Dieser Bewegung längs eines geschlossenen Weges kann beispielsweise mit Hilfe von um mindestens zwei Zahnräder herum geführten Ketten oder um Umlenkelemente herumgeführten Zahnriemen erfolgen. Dann bewegt sich der Schweißbacken über eine bestimmte Strecke parallel zu den Folienbahnen und kann diese dabei verschweißen.

Erfindungsgemäß kann in Weiterbildung ebenfalls vorgesehen sein, daß der Schweißbacken und/oder das Gegenelement um eine ortsfeste Achse herum bewegt werden, so daß sie also längs einer Kreisbahn bewegt werden.

Wenn die Kunststoffhüllen Löcher aufweisen sollen, kann die Vorrichtung erfindungsgemäß eine Einrichtung zum Herstellen einer Lochung der Folienbahn während des Transports aufweisen.

Diese Einrichtung kann in Weiterbildung ein mit mindestens einem Lochstempel versehenes Rad aufweisen, das um eine parallel zu der Folienbahn und senkrecht zu der Transportrichtung verlaufende Achse mit einer der Transportgeschwindigkeit entsprechenden Umfangsgeschwindigkeit angetrieben wird. Dieses Rad führt dann eine Lochung längs der Transportrichtung oder eine Lochreihe quer zur Transportrichtung durch.

Insbesondere kann auch vorgesehen sein, daß die Locheinrichtung ein auf der gegenüberliegenden Seite der Folienbahn um eine parallele Achse gegenläufiges synchron drehangetriebenes Rad mit mindestens einem Loch aufweist, das in seiner Position der Position des Lochstempels entspricht und in das dieser Lochstempel eingreift.

Soll die Lochreihe quer zur Transportrichtung der Kunststoffbahnen angeordnet sein, können Lochstempel längs einer Geraden parallel zur Drehachse des Laufrades angeordnet sein. Das gleiche gilt für die Löcher.

Wenn die Lochreihe aber parallel zur Längsrichtung der Kunststoffbahnen angeordnet werden soll, können die Lochstempel und die Löcher längs eines Umfangs des entsprechenden Elements angeordnet sein.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: stark vereinfacht eine Anlage zur Durchführung des von der Erfindung vorgeschlagenen Verfahrens;
- Fig. 2: eine Aufsicht auf eine Vorrichtung zur Herstellung von Kunststoffhüllen;
- Fig. 3: eine Aufsicht auf eine geänderte Vorrichtung;
- Fig. 4: eine bekannte Kunststoffhülle zur Erklärung der Wirkungsweise der von der Erfindung vorgeschlagenen Vorrichtung.

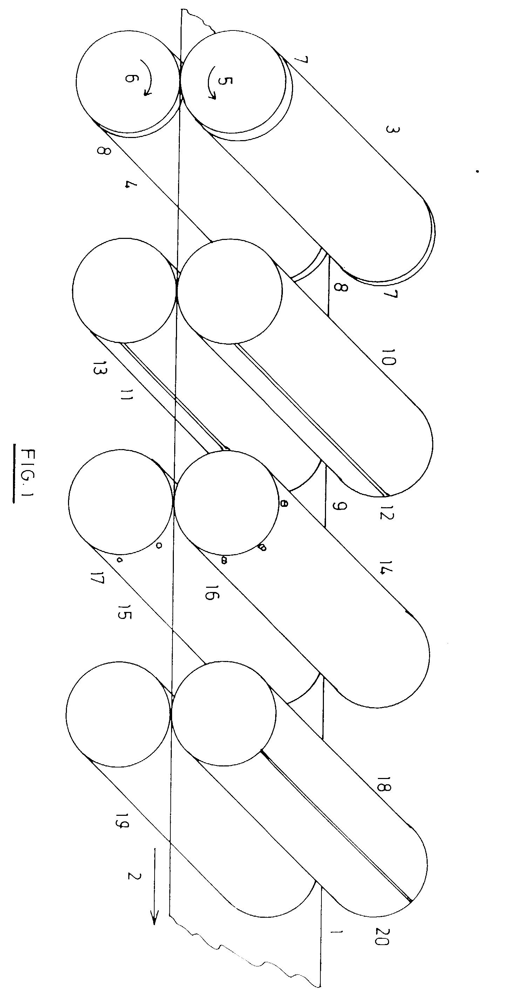

Die in Fig. 1 stark vereinfacht dargestellte Vorrichtung dient dazu, aus zwei flach übereinandergelegten Folienbahnen einzelne Kunststoffhüllen herzustellen. Die Folienbahnen können getrennt oder längs einer Längskante miteinander verbunden sein. In der vereinfachten Darstellung sind die beiden Folienbahnen als eine Bahn 1 dargestellt. Diese Bahn 1 verläuft horizontal und ist in einer Ebene angeordnet. Zu ihrem Transport mit einer kontinuierlichen konstanten Geschwindigkeit können Transportwalzen angeordnet sein, die drehangetrieben werden. Dies ist im einzelnen nicht dargestellt. Die Transportrichtung in Fig. 1 verläuft von links nach rechts in Richtung des Pfeiles 2. In Transportrichtung gesehen enthält die Vorrichtung zunächst zwei Walzen 3, 4, die im dargestellten Beispiel beide gleiche Größe, d. h. gleiche Länge und gleichen Umfang aufweisen. Beide Walzen 3, 4 sind um je eine Achse drehbar, wobei die beiden Achsen parallel zueinander verlaufen. Diese Walzen 3, 4 sind so angeordnet, daß sie die Folienbahn 1 zwischen sich einschließen und sich unter Einschluß der Folienbahn 1 berühren. Beispielsweise wird die obere Walze 3 in Richtung des Pfeiles 5 drehangetrieben und nimmt die untere Walze 4 in Richtung des Pfeiles 6 mit. Ebenfalls möglich ist es, daß die Walzen aufgrund des Druckes, den sie auf die Folienbahn 1 ausüben, von dieser mitbewegt werden. Weiterhin möglich ist ein eigener Antrieb beider Walzen, der synchronisiert zu dem Transport der Folienbahn 1 erfolgt. Die Walze 3 enthält im Bereich ihres vorderen Endes einen Streifen 7, der als Schweißrad ausgebildet ist, also beispielsweise elektrisch beheizt wird. Dieser elektrisch beheizte Bereich führt beim Abwälzen auf der Folienbahn 1 zu einer Erwärmung der Folienbahn 1 und damit zu einer Verschweißung der beiden die Folienbahn 1 bildenden Lagen der Kunststoffolie. Die gegenüberliegende Walze 4 weist einen ähnlichen Streifen 8 auf, der entweder auch als Schweißrad ausgebildet ist oder nur als Gegenelement wirkt. Bei dem Transport der Folienbahn 1 führen die beiden Streifen 7, 8 also eine Längsverschweißung der beiden die Folienbahn 1 bildenden Lagen durch. Je nach Art der herzustellenden Kunststoffhülle können solche Streifen auch am gegenüberliegenden Ende der beiden Walzen 3, 4 angeordnet sein, um auch eine Längsverschweißung der in Fig. 1 hinteren Kante 19 der Kunststoffbahn 1 durchzuführen.

In Transportrichtung, siehe den Pfeil 2, auf die Walze 3, 4 folgend ist ein zweites Walzenpaar 10, 11 angeordnet, die beide wiederum um zwei parallele Achsen gegenläufig drehbar angeordnet sind. Der Drehantrieb kann durch einen Eigenantrieb durchgeführt werden. Die obere Walze 10 dieses Walzenpaars enthält einen Streifen 12, der parallel zu der Drehachse über die gesamte Breite der Folienbahn 1 verläuft und als Schweißbacken ausgebildet ist und dann, wenn er bei der Drehbewegung die Kunststoffbahn 1 berührt, eine quer verlaufende Verschweißung der Kunststoffbahn durchführt. An der gegenüberliegenden, d.h. unter der Bahn 1 angeordneten Walze 11 ist ein entsprechender Gegenbacken 13 angeordnet, der wiederum entweder nur als Gegenelement, gegen den die Verschweißung durchgeführt wird, oder als eigener Schweißbacken ausgebildet sein kann.

Mit Hilfe des Walzenpaares 10, 11 wird also eine Querverschweißung der beiden die Kunststoffbahn 1 bildenden Lagen durchgeführt. Es kann sich hier ebenso wie bei der Längsverschweißung um eine doppelte Schweißnaht handeln.

In Transportrichtung der Bahn 1 auf das Walzenpaar 10, 11 folgend ist ein weiteres Walzenpaar 14, 15 in gleicher Weise angeordnet wie das Walzenpaar 10, 11. An dem in Fig. 1 vorderen Ende der oberen Walze 14 sind im dargestellten Beispiel vier Lochstempel 16 angeordnet, während an dem entsprechenden Ende der unteren Walze 15 vier Löcher 17 angeordnet sind. Bei einer synchronen gegenläufigen Drehung der beiden Walzen 14, 15 greifen die Lochstempel 16 in die Löcher 17 ein und führen dabei eine Lochung der Folie durch. Der gegenseitige Abstand der Lochstempel 16 und ihre Orientierung zu der durch den Schweißbacken 12 durchgeführten Querschweißung ist so eingerichtet, daß die Löcher an dem Rand der Kunststoffhülle an den genormten Stellen hergestellt werden.

Auf das Walzenpaar 14, 15 folgt dann noch ein letztes Walzenpaar 18, 19, die wiederum in ähnlicher Weise angeordnet und angetrieben werden wie die vorhergehenden Walzenpaare. Längs einer parallel zur Drehachse verlaufenden Umfangslinie ist die obere Walze 18 mit einem Messer 20 versehen, das bei der Drehung die Bahn 1 zerschneidet. Die untere Walze 19 enthält ein Gegenelement, beispielsweise eine Kante am Rand einer Vertiefung. In der in der Fig. 1 dargestellten Position ist diese Vertiefung nicht zu sehen.

Das Messer 20 schneidet die fertiggestellten Kunststoffhüllen von der Bahn 1.

Die in der Figur dargestellte Vorrichtung arbeitet bei konstantem kontinuierlichen Weitertransport der Kunststoffbahn 1, so daß zu keinem Zeitpunkt während der Produktion ein Anhalten des Transports erforderlich ist.

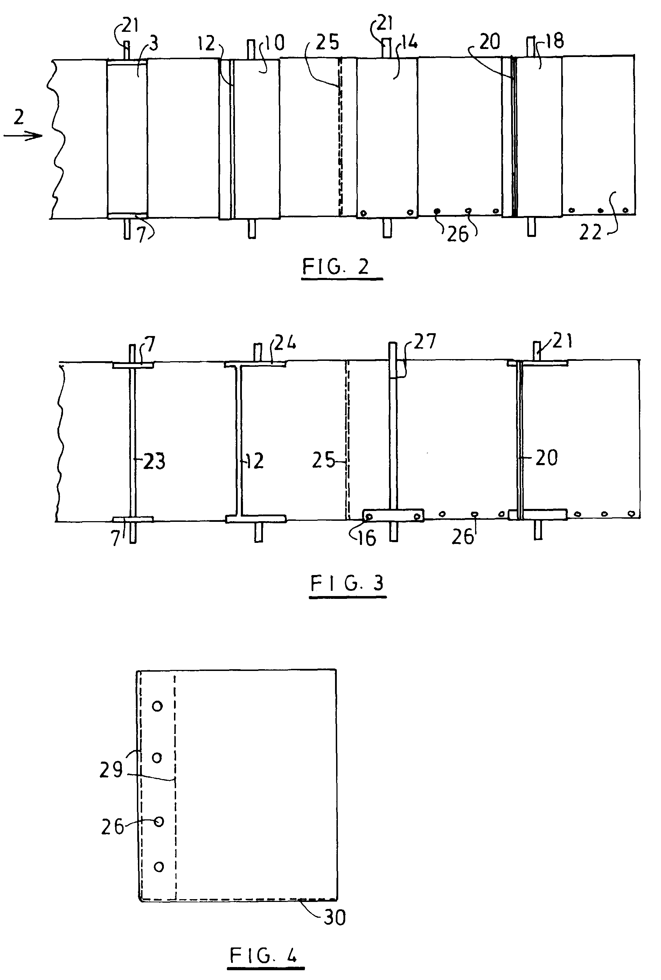

Nun zu Fig. 2. Diese zeigt in verkleinertem Maßstab eine Aufsicht auf die Anordnung der Fig. 1 mit dem entsprechenden Walzen. Die erste, d.h. in Fig. 1 linke Walze 3 führt die Längsverschweißung mit Hilfe des an ihrem einen oder auch an beiden Enden angeordneten Schweißrades 7 durch. Die Walze ist an beiden Enden mit einem Achsstummel 21 versehen, der zur Lagerung der Walze 3 und zu ihrem Antrieb verwendet werden kann. Einzelheiten sind nicht dargestellt.

Auch die folgende Walze 10 zur Herstellung der Querschweißung, die Walze 14 zur Herstellung der Lochung und die Walze 18 zum Trennen der Kunststoffhüllen 22 von der Bahn 1 sind in dieser Weise gelagert. Alle Walzen können so ausgebildet sein, daß sie an dem Transport der Folie 1 mitwirken. Dies kann beispielsweise durch eine entsprechende Oberflächengestaltung erreicht werden. Es ist selbstverständlich aber auch möglich, daß der eigentliche Transport der Bahn 1 von anderen hier nicht dargestellten Transportwalzen übernommen wird. In diesem Fall können die Einrichtungen zur Vornahme der verschiedenen Vorgänge auch etwas anders aufgebaut sein, wie dies vereinfacht in Fig. 3 dargestellt ist. Hier sind die Schweißräder 7 zur Herstellung der Längsverschweißung an einer Welle 23 angeordnet, die nur die Drehung der beiden Schweißräder 7 bewirkt. Der Schweißbacken 12 ist an dem Umfang zweier Räder 24 angeordnet, so daß hier sogar die Welle weggelassen werden kann. Der Schweißbacken stellt die Querschweißung 25 her.

Wenn die Lochreihe 26 nur längs eines Randes der Bahn 1 hergestellt werden soll, kann das entsprechende die Lochstempel 16 aufweisende Rad auch an einer einzigen Welle 27 angeordnet sein.

Das Messer 20, das die Folienbahn quer vollständig trennt, ist wieder in ähnlicher Weise angeordnet wie der Schweißbakken 12.

Fig. 4 zeigt eine Kunststoffhülle, wie sie mit dem von der Erfindung vorgeschlagenen Verfahren hergestellt werden kann. Die Kunststoffhülle 28 enthält längs ihrer einen Längskante zwei parallel zueinander verlaufende Längsschweißungen 29, die zwischen sich einen Raum frei lassen, in den ein Streifen eingelegt werden kann. Diese Längsschweißung 29 wird im Stand der Technik so hergestellt, daß es sich auch um eine Schweißung in Längsrichtung der zusammenhängenden Folienbahn 1 handelt. Nach der Erfindung ist dies aber nicht erforderlich. Es kann sich bei der Längsschweißung 29 der Kunststoffhülle 28 auch um die Querschweißung 25 der Folienbahn 1 handeln. In diesem Fall sind die Lochstempel 16 längs einer Geraden parallel zur Drehachse der Walze 14 angeordnet. Das gleiche gilt für die Löcher 17 in der unteren Walze 15.

Die den unteren Rand der Kunststoffhülle 28 bildende Schweißung 30, die im Stand der Technik die Querschweißung bildet, kann dann die Längsschweißung sein.

Die beiden Schweißnähte 29 können gleichzeitig mit Hilfe einer Einrichtung hergestellt werden, entweder mit einem Schweißrad 7, das zwei Schweißungen nebeneinander herstellt, oder mit einem Schweißbacken 12, der zwei Schweißdrähte enthält.

Die Verschweißung des Materials kann nicht nur im Wärme-Kontaktverfahren, sondern auch durch Ultraschall erfolgen.

## Patentansprüche

1. Verfahren zum kontinuierlichen Herstellen von Kunststoffhüllen (28), bei dem
1.1 zwei Folienbahnen flach aufeinander gelegt und
1.2 die Folienbahnen kontinuierlich weiter bewegt werden,
1.3 die Bahn in einem der Abmessung der Hülle (28) in Transportrichtung entsprechenden Abstand mit mindestens einer Querschweißung (25) versehen werden, und
1.4 die verschweißten Folienbahnen durch einen quer zur Transportrichtung verlaufenden Schnitt voneinander getrennt werden.

2. Verfahren nach Anspruch 1, bei dem die Bahnen während der Bewegung längs mindestens einer Längskante miteinander verschweißt werden.

3. Verfahren nach Anspruch 1 oder 2, bei dem die Längsschweißung durch ein Schweißrad (7) hergestellt wird, das um eine parallel zu der Fläche der Bahnen (1) und senkrecht zu der Transportrichtung der Bahnen (1) verlaufende Achse mit einer der Lineargeschwindigkeit der Bahnen (1) entsprechenden Umfangsgeschwindigkeit gedreht wird.

4. Verfahren nach einem der vorhergehenden Ansprüche, bei dem das Schweißrad (7) mit einem auf der gegenüberliegenden Seite der Bahnen (1) angeordneten in entgegengesetzter Drehrichtung rotierenden Rad (8) zusammenwirkt, wobei insbesondere die Folienbahnen (1) zwischen dem Schweißrad (7) und dem Gegenrad (8) hindurch bewegt werden.

5. Verfahren nach einem der vorhergehenden Ansprüche, bei dem die Querschweißung (25) von einem Schweißbacken (12) durchgeführt wird, der an der Schweißstelle mit den Folienbahnen (1) mitbewegt wird, wobei insbesondere der Schweißbacken (12) mit einem auf der gegenüberliegenden Seite der Folienbahn (1) angeordneten, mit den Folienbahnen (1) mitbewegten Gegenbacken (13) zusammenwirkt.

6. Verfahren nach Anspruch 5, bei dem der Schweißbacken (12) und der Gegenbacken (13) gegenläufig längs eines geschlossenen Weges, insbesondere längs einer Kreisbahn, mit einer der Lineargeschwindigkeit der Folienbahnen (1) entsprechenden Umfangsgeschwindigkeit bewegt werden und mindestens an der Schweißstelle die Folienbahn (1) zwischen sich einschließen, insbesondere berührend.

7. Verfahren nach Anspruch 5 oder 6, bei dem der Schweißbacken (12) eine Trennschweißung durchführt.

8. Verfahren nach einem der vorhergehenden Ansprüche, bei dem die Folienbahnen (1) mit einem quer zur Transportrichtung verlaufenden Messer (20) getrennt werden, das an der Trennstelle mit den Bahnen (1) mitbewegt wird und vorzugsweise mit einem auf der gegenüberliegenden Seite der Folienbahnen (1) angeordneten, insbesondere mit den Folienbahnen (1) mitbewegten Gegenelement zusammenwirkt, wobei insbesondere das Messer (20) und/oder das Gegenelement gegenläufig längs eines geschlossenen Weges bewegt werden, insbesondere längs einer Kreisbahn.

9. Verfahren nach einem der vorhergehenden Ansprüche, bei dem die Folienbahnen (1) während ihres Transports mit einer Lochung (26) versehen werden, die vorzugsweise mit einem mit den Folienbahnen (1) mitbewegten Lochstempel (16) durchgeführt wird, der insbesondere mit einem auf der gegenüberliegenden Seite der Folienbahnen (1) mit diesen mitbewegten Matrizenelement zusammenwirkt, wobei insbesondere der Lochstempel (16) und/oder das Matrizenelement gegenläufig längs eines geschlossenen Weges bewegt werden, insbesondere längs einer Kreisbahn.

10. Verfahren nach Anspruch 9, bei dem die Lochung (26) an der Längskante in Transportrichtung durchgeführt wird.

11. Vorrichtung zum kontinuierlichen Herstellung von Kunststoffhüllen (28), mit
11.1 einer Transporteinrichtung zum kontinuierlichen Transport zweier aufeinander gelegter Bahnen (1) aus verschweißbarer Folie,
11.2 einer Einrichtung zum Herstellen einer quer zur Transportrichtung der Folienbahnen (1) verlaufenden Querschweißung (25) während des Transports, sowie mit
11.3 einer Trenneinrichtung, die
11.3.1 die verschweißten Folienbahnen (1) während des Transports quer zur Transportrichtung trennt.

12. Vorrichtung nach Anspruch 11, mit einer Einrichtung zum kontinuierlichen Verschweißen der Folienbahnen (1) längs einer Längskante der Bahnen (1).

13. Vorrichtung nach Anspruch 11 oder 12, bei der die Einrichtung zur Längsverschweißung ein Schweißrad (7) aufweist, das mit einer der Lineargeschwindigkeit der Folienbahnen (1) entsprechenden Umfangsgeschwindigkeit drehangetrieben wird und mit einem in umgekehrter Drehrichtung rotierend auf der gegenüberliegenden Seite der Folienbahnen (1) angeordneten Gegenrad (8) zusammenwirkt und bei der vorzugsweise die Einrichtung zum Querschweißen einen quer angeordneten Schweißbacken (12) aufweist, der längs eines geschlossenen Weges parallel zu sich selbst mit einer der Lineargeschwindigkeit der Folienbahnen (1) entsprechenden Umfangsgeschwindigkeit bewegbar ist und mit einem auf der gegenüberliegenden Seite der Folienbahn (1) angeordneten gegenläufig bewegbaren Gegenelement (13) zusammenwirkt.

14. Vorrichtung nach Anspruch 13, bei der der Schweißbacken (12) und/oder der Gegenbacken (13) um eine ortsfeste Achse herum bewegt werden.

15. Vorrichtung nach einem der Ansprüche 11 bis 14, mit einer Einrichtung zum Herstellen einer Lochung (26) der Folienbahnen (1) während des Transports, wobei insbesondere die Einrichtung zum Lochen ein mit mindestens einem Lochstempel (16) versehenes Rad (14) aufweist, das um eine parallel zu den Folienbahnen (1) und senkrecht zu der Transportrichtung verlaufende Achse mit einer der Lineargeschwindigkeit entsprechenden Umfangsgeschwindigkeit angetrieben wird, und ggf. ein auf der gegenüberliegenden Seite der Folienbahnen (1) um eine parallele Achse gegenläufig synchron drehangetriebenes Rad (15) mit mindestens einem Loch (17) aufweist, das in seiner Position der Position des Lochstempels (16) entspricht, wobei vorzugsweise die Lochstempel (16) und die Löcher (17) längs eines Umfangs des jeweiligen Rades (14, 15) oder längs einer Geraden parallel zu der Drehachse des jeweiligen Rades (14, 15) angeordnet sind.
